# FASCICULE DE BREVET EUROPEEN

(11) **EP 3 353 879 B1**
(45) Date de publication et mention de la délivrance du brevet: **06.05.2020**
(21) Numéro de dépôt: 16760756.3
(22) Date de dépôt: 07.09.2016
(51) Int. Cl.: H02K 5/128, H02K 3/24, H02K 9/19

(54) **MACHINE ELECTRIQUE TOURNANTE COMPORTANT UN ROTOR ET UN STATOR POUR LE PASSAGE D'UN FLUIDE**
ELEKTRISCHE ROTATIONSMASCHINE MIT EINEM ROTOR UND EINEM STATOR FÜR DEN DURCHGANG EINER FLÜSSIGKEIT
ELECTRICAL ROTATING MACHINE COMPRISING A ROTOR AND A STATOR FOR THE PASSAGE OF A FLUID

(30) Priorité: 25.09.2015 FR 1559046
(43) Date de publication de la demande: 01.08.2018
(73) Titulaire: IFP Energies nouvelles, 92500 Rueil-Malmaison (FR); Mavel S.r.l., 11026 Pont Saint Martin (AO) (IT)
(72) Inventeur: FAVRE, Luca, 11010 Valpelline (AO) (IT); BETTONI, Davide, Settimo Vittone To Italy (IT)
(74) Mandataire: IFP Energies nouvelles
(86) Numéro de dépôt international: PCT/EP2016/071095
(87) Numéro de publication internationale: WO 2017/050577

(56) Documents cités:
- EP-A1- 1 499 001
- EP-A2- 1 065 778
- EP-A2- 1 120 886
- EP-A2- 1 241 773
- AT-A1- 509 660
- US-A1- 2003 057 800
- US-A1- 2008 042 498
- US-A1- 2009 022 610
- US-A1- 2014 084 741

## Description

La présente invention se rapporte à une machine électrique tournante comportant un rotor et un stator pour le passage d'un fluide.

Généralement, une telle machine électrique comporte un stator et un rotor disposés coaxialement l'un dans l'autre.

Le rotor est formé d'un corps de rotor portant des générateurs de flux magnétique, tels que des aimants permanents ou des bobinages.

Ce rotor est généralement logé à l'intérieur du stator qui porte des générateurs de flux magnétique sous la forme d'enroulements électriques (ou bobinages d'induit) pour générer un champ magnétique permettant d'entrainer en rotation le rotor en association avec le champ magnétique généré par les aimants ou les bobinages du rotor.

Le stator comprend de manière habituelle une pluralité d'encoches radiales en direction du rotor et s'étendant tout au long du pourtour du stator. Ces encoches sont prévues pour recevoir les bobinages d'induit qui y sont fixés par tous moyens connus.

Il est déjà connu un type de machine électrique à fort entrefer entre le rotor et le stator, ou "Air Gap", dont l'entrefer peut parfois mesurer plusieurs centimètres afin de laisser passer un fluide gazeux ou liquide au travers de cet entrefer.

Ce type de machine est notamment connu par les demandes de brevet US 2008289333 ou US 2013169074 ou US 2013043745 pour des machines synchro-réluctante à grand "Air Gap" fonctionnant à faible vitesse dont le fort entrefer permet de conduire un fluide au travers de celui-ci.

Cependant, ce fort entrefer représente un inconvénient pour assurer le passage du flux magnétique entre le rotor et le stator et donc une limitation pour le rendement intrinsèque de la machine ainsi que pour l'encombrement du stator pour la même puissance délivrée.

La demande de brevet US 2008/0042498 décrit une machine électrique avec des canaux de circulation de fluide dans les encoches d'un stator.

La demande de brevet EP 1241773 décrit une machine électrique avec des canaux de refroidissement formés entre les dents et un palier de stator.

La demande de brevet EP 1499001 décrit une machine électrique avec des tubes de refroidissement disposés dans les encoches d'un stator.

La demande de brevet US 2009/0022610 décrit un moteur de pompe centrifuge, dans laquelle des passages de fluide sont prévues dans le stator.

La demande de brevet EP 1120886 décrit une machine électrique de type cage pour les hautes vitesses.

La demande de brevet US 2014/0084741 décrit une machine électrique appliquée à un système de direction assistée.

La présente invention vise à remédier aux inconvénients énumérés ci-dessus grâce à une machine à faible entrefer, permettant une meilleure conversion d'énergie entre le stator et le rotor, et à un passage de fluide possible au travers de la machine.

A cet effet, la présente invention concerne une machine selon la revendication 1, comprenant un rotor et un stator comportant une multiplicité de passages radiaux disposés circonférentiellement le long dudit stator, des générateurs de flux magnétique logés dans les passages, et un palier de stator recevant le rotor, caractérisée en ce que les passages radiaux comportent des galeries de circulation de fluide en regard des générateurs de flux magnétique.

Les passages radiaux étant délimités par des voiles radiaux, une bordure externe annulaire plane du stator et le palier de stator.

Les galeries de circulation de fluide peuvent être délimitées par les voiles radiaux, le palier de stator et les générateurs de flux magnétique.

Les voiles peuvent avoir une direction axiale sensiblement parallèle à l'axe longitudinal du stator.

Les voiles peuvent avoir une direction axiale inclinée par rapport à l'axe longitudinal du stator.

Les voiles peuvent avoir une direction en forme de vrille par rapport à l'axe longitudinal du stator.

Les voiles peuvent avoir, en section longitudinale, un profil aérodynamique.

Le fluide peut être un fluide de refroidissement liquide ou gazeux pour la machine.

Le fluide peut être un fluide compatible avec l'industrie alimentaire ou pétrolière ou du, bâtiment & travaux publics.

Les autres caractéristiques et avantages de l'invention vont apparaître maintenant à la lecture de la description qui va suivre, donnée à titre uniquement illustratif et non limitatif, et à laquelle sont annexées :
- la figure 1 qui est une vue en coupe radiale de la machine électrique selon l'invention,
- la figure 2 qui est une vue semblable à celle de la figure 1 avec le parcours des lignes de champ magnétique,
- les figures 3 et 4 qui illustrent différentes configurations du stator de la machine de la figure 1 et
- la figure 5 qui montre une variante de la machine électrique de la figure 1. Cette variante ne fait pas partie de l'invention

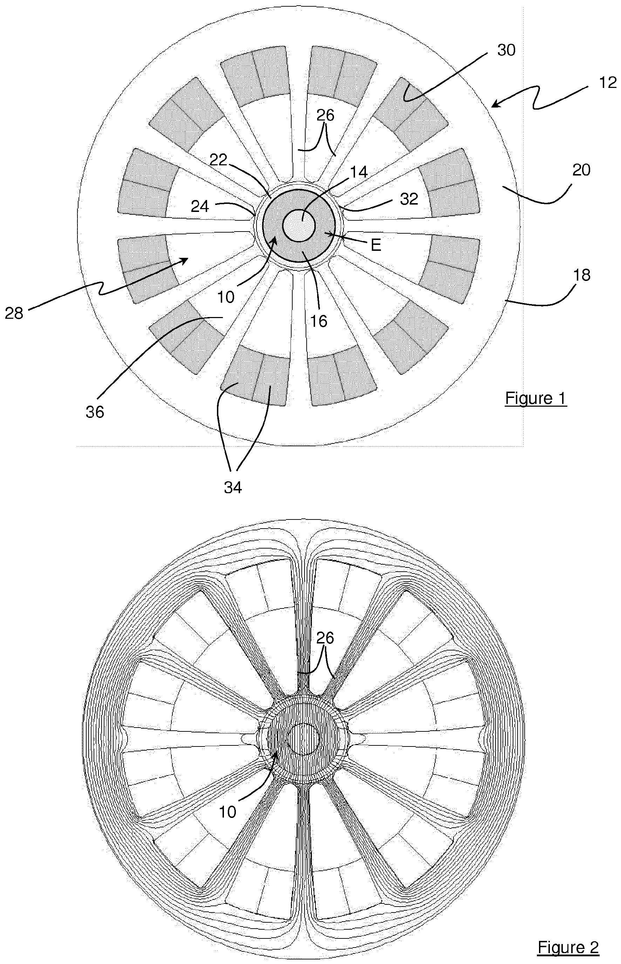

La machine électrique tournante illustrée sur la figure 1, ici à titre d'exemple un moteur électrique, comporte un rotor 10 et un stator 12 qui, à l'état monté, sont imbriqués l'un dans l'autre en étant coaxiaux tout en laissant le rotor libre en rotation.

Cette machine est uniquement à titre d'exemple dans la suite de la description une machine synchrone à une paire de pôles.

Cela n'écarte en aucune façon toute autre machine électrique, comme des machines asynchrones à rotor bobiné ou à cage d'écureuil.

Le rotor de la machine selon la figure 1 comporte, de manière connue en soi, un arbre 14, de préférence magnétique, sur lequel est placé un empilage de tôles ferromagnétiques planes identiques, qui sont assemblées les unes aux autres par tous moyens connus pour former un corps de rotor 16.

Ce rotor porte des générateurs de flux magnétique (non représentés), principalement des aimants permanents de longueur sensiblement égale à la longueur du corps de rotor.

Le stator comporte également un empilage de tôles ferromagnétiques planes identiques qui sont reliées entre elles par tous moyens connus pour former un corps de stator tubulaire 18.

Ce corps de stator comporte une bordure externe annulaire plane 20 (ou culasse) et une partie centrale évidée 22 délimitée par un palier tubulaire 24 à l'intérieur duquel est logé le rotor.

Il est ainsi formé un entrefer E entre la périphérie externe du rotor et la périphérie interne du palier tubulaire du stator.

La culasse du stator est reliée au palier tubulaire par une multiplicité de voiles radiaux 26 repartis circonférentiellement régulièrement, ici 12 voiles à 30°, qui délimitent entre eux des passages radiaux 28 de forme sensiblement triangulaire avec la pointe du triangle dirigée vers le palier. Ces passages s'étendent radialement du bord inférieur 30 de la culasse annulaire 20 jusqu'au bord extérieur 32 du palier et se déploient axialement tout au long du corps de stator 18.

Pour des raisons de simplification dans la suite de la description, les voiles sont dénommés en tant que dents statoriques.

Comme illustré sur la figure 1, le stator comporte des générateurs de flux magnétique, ici des bobinages d'induit 34, de préférence étanches aux liquides, qui sont logés dans les passages 28 et plus précisément au voisinage du bord inférieur 30 de la culasse annulaire.

Les dents statoriques 26 de grande longueur permettent ainsi d'éloigner les bobinages du palier. De plus, comme mieux illustré sur la figure 2, ces dents permettent le guidage, vers le rotor 10, du flux magnétique généré par les bobinages qui sont éloignés de ce rotor.

De cette manière, la dimension de l'entrefer E est réduite (quelques millimètres) ce qui permet d'optimiser le rendement et les performances de la machine.

Les galeries axiales 36 ainsi formées entre les bobinages, le bord extérieur du palier et les dents statoriques forment alors une grille statorique permettant de laisser passer un fluide, tel qu'un fluide gazeux ou liquide.

Ceci permet d'assurer l'intégration dans une veine gazeuse ou fluidique de la machine et/ou son refroidissement et donc un positionnement optimisé dans un système donné contraint par l'encombrement et/ou le dégagement thermique.

De plus, les caractéristiques magnétiques de cette machine permettent de limiter la quantité de matière active pour un niveau de performances donné, notamment par rapport à une machine à grand entrefer.

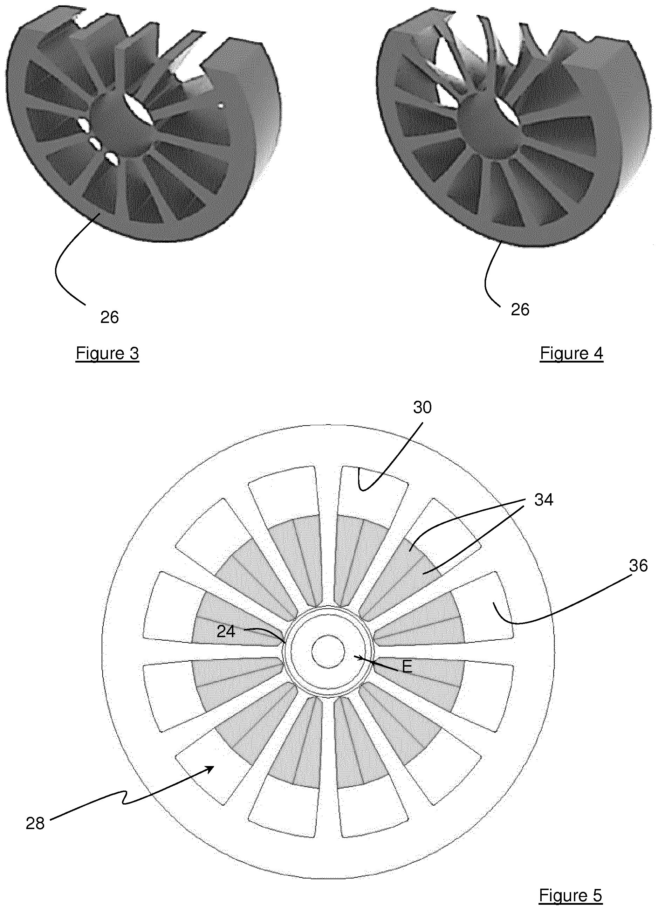

Comme illustre sur la figure 3, les dents 26 composant la grille statorique peuvent avoir une direction axiale sensiblement parallèle au fluide qui la traverse, c'est-à-dire sensiblement parallèle à l'axe longitudinal du stator, afin d'influencer le moins possible la direction de ce fluide.

Egalement, la direction axiale de ces dents peut être inclinée par rapport à l'axe longitudinal du stator.

Cette direction peut également être une forme aérodynamique complexe, tel qu'une forme en vrille comme illustré à la figure 4, destinée à guider/initier ou arrêter le mouvement du fluide.

Cette forme en vrille permet d'augmenter la surface de contact des dents avec le fluide.

Par ailleurs, ce vrillage des dents statoriques peut s'avérer judicieux d'un point de vue magnétique car il permet de réduire les ondulations de couple et cela selon l'angle d'inclinaison.

Ces dents peuvent aussi avoir un profil aérodynamique pour minimiser la perte de charge liée au passage du fluide traversant la grille, comme une forme, en section, de goutte d'eau ou d'aile d'avion.

Un traitement surfacique du stator rend cette machine compatible avec l'industrie alimentaire, pétrolière, bâtiment & travaux publics et autres nécessitant un transport et ou guidage d'un fluide à travers d'une machine électrique.

Du point de vue du refroidissement de la machine, ce type de machine offre une surface d'échange très élevée au niveau du stator permettant d'utiliser un système de refroidissement simplifié par rapport à une machine électrique classique présentant des performances similaires et potentiellement d'augmenter la densité de courant dans le stator grâce à ce refroidissement optimisé.

Il est à noter que ce type de machine peut notamment être intégré assez simplement en remplacement d'un système existant.

La variante de la figure 5 se distingue de la figure 1 par le fait que les bobinages 34 sont placés dans les passages 28 à proximité du palier 24 et donc au plus près de l'entrefer E.

Les galeries 36 pour le passage de fluide se situent alors entre les bobinages et le bord inférieur 30 de la culasse annulaire 20 du stator et les voiles 26.

## Revendications

1. Machine électrique comprenant un rotor (10) et un stator (12) comportant une bordure externe annulaire plane (20), dénommé en tant que culasse (20), avec un bord inférieur (30) radialement plus près du rotor, une partie centrale évidée (22) délimitée par un palier tubulaire (24) à l'intérieur duquel est logé le rotor, une multiplicité de passages radiaux (28) disposés circonférentiellement le long dudit stator, et des générateurs de flux magnétique (34) logés dans les passages radiaux (28) les passages radiaux (28) étant délimités par des dents statoriques (26), le bord inférieur de la culasse (20) et le palier tubulaire du stator (24), les passages radiaux (28) comportant des galeries de circulation de fluide (36) radialement en regard des générateurs de flux magnétique (34), les générateurs de flux magnétique (34) étant logés au voisinage du et en contact avec le bord inférieur (30) de la culasse annulaire (20), les dents statoriques étant de grande longueur pour que les générateurs de flux magnétiques (34) soient éloignés du palier tubulaire du stator (24), lesdits passages radiaux (28) ayant une forme sensiblement triangulaire avec la pointe du triangle dirigée vers le palier tubulaire du stator (24) et la longueur radiale dédites galeries de circulation de fluide (36) étant supérieure à la longueur radiale des générateurs de flux magnétique (34).

2. Machine électrique selon la revendication 1, **caractérisée en ce que** les galeries de circulation de fluide (36) sont délimitées par les dents statoriques (26), le palier tubulaire (24) du stator et les générateurs de flux magnétique (34).

3. Machine électrique selon l'une des revendications précédentes, **caractérisée en ce que** les dents statoriques (26) ont une direction axiale sensiblement parallèle à l'axe longitudinal du stator (12).

4. Machine électrique selon l'une des revendications 1 à 2, **caractérisée en ce que** les dents statoriques (26) ont une direction axiale inclinée par rapport à l'axe longitudinal du stator (12).

5. Machine électrique selon l'une des revendications 1 à 2, **caractérisée en ce que** les dents statoriques (26) ont une direction en forme de vrille par rapport à l'axe longitudinal du stator (12).

6. Machine électrique selon l'une des revendications 1 à 2, **caractérisée en ce que** les dents statoriques (26) ont, en section longitudinale, un profil aérodynamique en forme d'aile d'avion ou de goutte d'eau.

7. Machine électrique selon la revendication 1, **caractérisée en ce que** le fluide est un fluide de refroidissement liquide ou gazeux pour la machine.

## Patentansprüche

1. Elektrische Maschine, welche einen Rotor (10) umfasst, und einen Stator (12), der eine ebene ringförmige äußere Umrandung (20), die als Joch (20) bezeichnet wird, mit einem unteren Rand (30), der dem Rotor radial näher ist, einen vertieften zentralen Abschnitt (22), der von einem rohrförmigen Lager (24) begrenzt wird, in dessen Innerem der Rotor aufgenommen ist, eine Vielzahl von radialen Durchlässen (28), die in Umfangsrichtung entlang des Stators angeordnet sind, und Magnetflussgeneratoren (34), die in den radialen Durchlässen (28) untergebracht sind, aufweist,
wobei die radialen Durchlässe (28) von Statorzähnen (26), dem unteren Rand des Jochs (20) und dem rohrförmigen Lager des Stators (24) begrenzt werden, wobei die radialen Durchlässe (28) Fluidzirkulationskanäle (36) aufweisen, die sich radial gegenüber den Magnetflussgeneratoren (34) befinden,
wobei die Magnetflussgeneratoren (34) in der Nähe des unteren Randes (30) des ringförmigen Jochs (20) und in Kontakt mit ihm untergebracht sind, wobei die Statorzähne von großer Länge sind, damit die Magnetflussgeneratoren (34) von dem rohrförmigen Lager des Stators (24) entfernt sind, wobei die radialen Durchlässe (28) eine im Wesentlichen dreieckige Form aufweisen, wobei die Spitze des Dreiecks zu dem rohrförmigen Lager des Stators (24) hin gerichtet ist, und wobei die radiale Länge der Fluidzirkulationskanäle (36) größer als die radiale Länge der Magnetflussgeneratoren (34) ist.

2. Elektrische Maschine nach Anspruch 1, **dadurch gekennzeichnet, dass** die Fluidzirkulationskanäle (36) von den Statorzähnen (26), dem rohrförmigen Lager (24) des Stators und den Magnetflussgeneratoren (34) begrenzt werden.

3. Elektrische Maschine nach einem der vorhergehenden Ansprüche, **dadurch gekennzeichnet, dass** die Statorzähne (26) eine axiale Richtung aufweisen, die im Wesentlichen parallel zur Längsachse des Stators (12) ist.

4. Elektrische Maschine nach einem der Ansprüche 1 bis 2, **dadurch gekennzeichnet, dass** die Statorzähne (26) eine axiale Richtung aufweisen, die in Bezug auf die Längsachse des Stators (12) geneigt ist.

5. Elektrische Maschine nach einem der Ansprüche 1 bis 2, **dadurch gekennzeichnet, dass** die Statorzähne (26) eine schneckenförmig gewundene Richtung in Bezug auf die Längsachse des Stators (12) aufweisen.

6. Elektrische Maschine nach einem der Ansprüche 1 bis 2, **dadurch gekennzeichnet, dass** die Statorzähne (26) im Längsschnitt ein aerodynamisches Profil von der Form einer Flugzeugtragfläche oder eines Wassertropfens aufweisen.

7. Elektrische Maschine nach Anspruch 1, **dadurch gekennzeichnet, dass** das Fluid ein flüssiges oder gasförmiges Kühlfluid für die Maschine ist.

## Claims

1. Electrical machine comprising a rotor (10) and a stator (12) comprising a flat annular outer edge (20), referred to as yoke (20), with an inner edge (30) radially closer to the rotor, an openwork central part (22) delimited by a tubular bearing (24) within which is housed the rotor, a multiplicity of radial passages (28) disposed circumferentially along said stator, and magnetic flux generators (34) housed in the radial passages (28)
the radial passages (28) being delimited by stator teeth (26), the bottom edge of the yoke (20) and the tubular bearing of the stator (24), the radial passages (28) comprising fluid circulation galleries (36) radially facing the magnetic flux generators (34), the magnetic flux generators (34) being housed in the vicinity of and in contact with the bottom edge (30) of the annular yoke (20), the stator teeth being longer so that the magnetic flux generators (34) are away from the tubular bearing of the stator (24), said radial passages (28) having a substantially triangular form with the point of the triangle directed toward the tubular bearing of the stator (24) and the radial length of said fluid circulation galleries (36) being greater than the radial length of the magnetic flux generators (34).

2. Electrical machine according to Claim 1, **characterized in that** the fluid circulation galleries (36) are delimited by the stator teeth (26), the tubular bearing (24) of the stator and the magnetic flux generators (34).

3. Electrical machine according to one of the preceding claims, **characterized in that** the stator teeth (26) have an axial direction substantially parallel to the longitudinal axis of the stator (12).

4. Electrical machine according to one of Claims 1 and 2, **characterized in that** the stator teeth (26) have an axial direction inclined relative to the longitudinal axis of the stator (12).

5. Electrical machine according to one of Claims 1 and 2, **characterized in that** the stator teeth (26) have a direction in the form of a curl relative to the longitudinal axis of the stator (12).

6. Electrical machine according to one of Claims 1 and 2, **characterized in that** the stator teeth (26) have, in longitudinal section, an aerodynamic profile in the form of an aeroplane wing or a drop of water.

7. Electrical machine according to Claim 1, **characterized in that** the fluid is a liquid or gaseous coolant for the machine.
